(19) Europäisches Patentamt
European Patent Office
Office européen des brevets

(11) **EP 2 775 604 A1**

(12) **EUROPEAN PATENT APPLICATION**

(43) Date of publication:
**10.09.2014 Bulletin 2014/37**

(51) Int Cl.:
***H02M 7/217*** (2006.01)

(21) Application number: **13158096.1**

(22) Date of filing: **07.03.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **NXP B.V.**
**5656 AG Eindhoven (NL)**

(72) Inventor: **Büthker, Henricus Cornelis Johannes**
**Redhill, Surrey RH1 1SH (GB)**

(74) Representative: **Hardingham, Christopher Mark**
**NXP B.V.**
**Intellectual Property & Licensing**
**Red Central**
**60 High Street**
**Redhill, Surrey RH1 1SH (GB)**

Remarks:
Amended claims in accordance with Rule 137(2) EPC.

(54) **A mains power converter, and methods of operating and equipment incorporating the same**

(57) A power converter is disclosed, which is configured to convert AC mains power to a DC voltage which is lower than an rms voltage of the AC mains, the power converter comprising a rectifier for rectifying an AC mains power; a capacitor; a switch configured to supply the rectified AC mains power to the capacitor during only a low-voltage part of any cycle of the AC mains; and a DC-DC power converter, typically a switched mode DC-DC power converter, configured to convert power from the capacitor to the DC voltage.

Electronic equipment incorporating such a power converter is also disclosed, together with methods of operating such a power converter.

Figure 3

Printed by Jouve, 75001 PARIS (FR)

**Description**

Field of the Invention

This invention relates to AC-DC converters and to methods of operating the same.

Background of the Invention

Many applications which operate at a low voltage such as 3.3V, or 5V or 12V, benefit from being connected to a mains power supply. Previously, a conventional way of obtaining a low voltage was to use a high-voltage capacitive divider, in which a capacitor is used as an impedance. The capacitor current is rectified and used. This method is efficient, but the capacitor is large and expensive.

Another conventional solution is to use a switched mode DC-DC converter. Such switched mode DC-DC converters generally may be configured to operate with a high efficiency, but are expensive. For example, for a 220V mains supply, for which the peak voltage is around 325V, it is generally required to have a switch and freewheel diode operable up to 600V. Also, the buffer capacitor on the input side would require to be specified to at least 400V, as would the inductive element such as a transformer. Furthermore, in order to convert 325V down to 3.3V, the DC-DC converter operates at only 1 % duty-cycle. This may be difficult to control, and is difficult, or at least expensive, to configure to operate with high efficiency.

A further known solution, which is generally less expensive than use of a DC-DC converter, is to use a low drop-out voltage regulator (LDO). An LDO typically comprises a power FET and a differential amplifier. The differential amplifier compares the output voltage - or alternatively and more commonly a well-defined fraction of the output voltage - with a reference voltage, and drives the power FET in linear mode to maintain a fixed output voltage. An LDO would be extremely inefficient if used to down-convert a mains voltage to a typical low-voltage: for instance, used with the same 220V mains supply resulting in peak voltages of 325V, to provide power for a 3.3 output voltage, it has to drop 322 V. So, in known solutions, the supply to the LDO is normally provided by a capacitor, which is charged to an intermediate voltage (just above the output DC voltage for good efficiency) from the rectified mains. Establishing the intermediate voltage is typically done by so-called "gated rectification", in which the mains is rectified by a bridge rectifier, and the output switchedly connected to the capacitor.

Since the efficiency of the LDO is directly related to the closeness of the input voltage to the output voltage, to achieve a high efficiency the capacitor voltage is kept close to the required DC output voltage as mentioned,; for example, to provide a 3.3V DC output, the capacitor voltage should be between 5V and no more than 10V.

Summary

According to a first aspect, there is provided a power converter configured to convert AC mains power to a DC voltage which is lower than an rms voltage of the AC mains, the power converter comprising a rectifier for rectifying an AC mains power; a capacitor; a switch configured to supply the rectified AC mains power to the capacitor during only a low-voltage part of any cycle of the AC mains; and a DC-DC power converter configured to convert power from the capacitor to the DC voltage. By supplying the rectified AC mains power to the capacitor during only a low-voltage part of the AC mains cycle, the capacitor may be charged to an intermediate voltage. Since the intermediate voltage may be significantly lower than the mains AC voltage, it may be possible to operate the DC-DC power converter at a significantly higher duty cycle than would be the case were it operating directly from the mains voltage.

In embodiments, the switch is configured to charge the capacitor to a voltage which is no more than 10 times larger than the DC voltage. The conversion ratio of the DC-DC converter may thereby be constrained to be no more than 10:1, and the minimum duty cycle may be similarly limited to no more the 10%.

In embodiments, the DC voltage is in the range of 0.8V to 12V, and in some embodiments, the DC voltage is 3.3V. This range of voltages, and 3.3V in particular, is very common for low voltage operating equipment. However, it will be appreciated that the invention is not limited any one specific voltage, since preferred low voltage operating characteristics may change over time and with developments in, for example, semiconductor or battery technology. As an example, some earlier electronic equipment has been designed to operated at so-called "TTL" voltage levels of 5V; 1.5V circuits are nowadays fairly commonly designed - since this voltage allows operation from conventional single cell alkaline batteries; more recent CPUs (central processing units may operate from input voltages as low as 0.8V); such voltages would also fall with the scope of embodiments.

The DC-DC power converter may be a switched mode DC-DC power converter. Power converter are generally no-dissipating, as will be described in more detailed hereinbelow, and switched mode DC-DC power converters are particularly convenient, well-known and convenient types of DC-DC power converters for use in embodiments.

In embodiments, the DC-DC power converter is a buck converter configured for operation using hysteretic control. However, other forms of control, such as will be familiar to the skilled person, may be used alternatively or in addition.

In embodiments, the rectifier is a bridge rectifier. However, the skilled person will appreciate that other forms of mains rectification may be used. For example and without limitation, a single-phase rectification may by used, with either a single diode or a pair of diodes. In such embodiments, alternate mains half-cycles (either all positive half-cycles or all negative half- cycles, are not used at all).

According to another aspect there is provided an electronic equipment comprising a power converter as claimed in any preceding claim, wherein the electronic equipment is arranged to be operated for no more than 5% of the time in which it is connected to a mains supply, and is a one of the group of electronic equipments comprising home and office lighting, door openers including garage door openers, catch-releasers including door-catch releasers, alarm systems, domestic consumer media equipment including tv and hifi, and computing equipment. It will be appreciated that, without limitation, embodiments are particularly useful for many types of electronic equipment, for which a low voltage power supply - such as could typically be provided by batteries or dry cells - is required, but where operation is only intermittent, such that connection to the mains is beneficial to avoid problems associated with battery deterioration or batteries have insufficient stand-by time.

According to another aspect there is provided a method of converting an AC mains power to a DC voltage which is lower than an rms voltage of the AC mains, the method comprising: rectifying the AC mains; supplying the rectified AC mains signal to charge a capacitor during only a low-voltage part of a mains half-cycle, the capacitor being configured as an input to a switched mode DC-DC power converter, and operating the switched mode DC-DC power converter to convert the power to the output voltage.

These and other aspects of the invention will be apparent from, and elucidated with reference to, the embodiments described hereinafter.

Brief description of Drawings

Embodiments of the invention will be described, by way of example only, with reference to the drawings, in which

figure 1 shows, schematically, a power converter according to a known arrangement in which a gated rectifier charges a capacitor which provides an input to a LDO;

figure 2 shows voltage and current waveforms for a converter as shown in figure 1;

figure 3 shows, schematically, a power converter according to embodiments, in which a gated rectifier charges a capacitor which provides an input to a switched mode DC-DC converter; and

figure 4 shows voltage and current waveforms for a converter as shown in figure ; and

figure 5 shows, in more detail, an example of a convertor according to figure 3.

It should be noted that the Figures are diagrammatic and not drawn to scale. Relative dimensions and proportions of parts of these Figures have been shown exaggerated or reduced in size, for the sake of clarity and convenience in the drawings. The same reference signs are generally used to refer to corresponding or similar feature in modified and different embodiments

Detailed description of embodiments

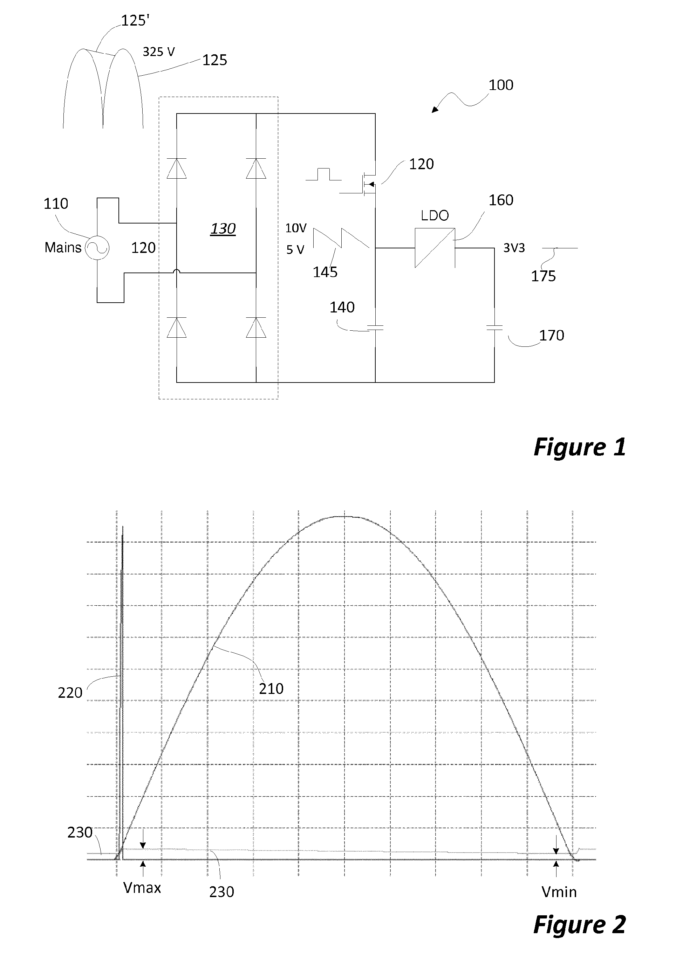

Figure 1 shows, schematically, a power converter according to a known arrangement in which a gated rectifier charges a capacitor which provides an input to a LDO, and figure 2 shows voltage and current waveforms for a converter as shown in figure 1. The known power converter 100 comprises an input which is connected to an AC mains supply 120. The AC mains supply 120 is rectified by bridge rectifier 130. The rectified voltage is connected intermittently, or in a gated fashion, across capacitor 140, the connection and disconnection being controlled by means of switch 150 in series with capacitor 140. The capacitor 140 also acts as input to a low drop-out voltage regulator (LDO). The LDO is arranged to provide a voltage output, which, in the case of figure 1, is set to 3.3V. As shown, there may be a smoothing capacitor 170 connected to the output. Also shown in the figure, as inserts, are various voltage waveforms: the voltage waveform after rectification is shown at 125, and is a fully rectified mains with a peak at 325V; a smoothed version, in embodiments with a smoothing input capacitor (not shown), is shown at 125'; the voltage on the capacitor 140 - which is approximately saw-tooth - is shown at 145. Finally, and trivially, the constant output voltage (which in the example is 3.3V) is shown at 175.

Figure 2 shows the results of a simulation of the operation of a power converter as shown in figure 1. The mains voltage 210 is plotted against time, over a mains half-cycle. Also shown, at 220, is the mains current which charges the capacitor 140. Finally, the figure shows the voltage 230 across the capacitor 140. As can be seen from the figure, there is a brief spike in the mains current, during which the capacitor is charged to a voltage Vmax. In a typical example, Vmax is 10V. A typically charging time may be 100µs. If the power converter is used to provide an average current of 10mA, the current pulse then averages 1A. Once the voltage across the capacitor reaches Vmax, the gating switch 150 is opened. Since, in the example, the mains is disconnected once the voltage across the capacitor reaches 10V, the capacitor only needs to be specified for 16V. A 16V capacitor is generally much less expensive than a 400V, or 600V type, which would be required if the maximum mains voltage were to be applied across it.

The capacitor is used as input to the LDO, and consequently the voltage across it slowly decays to a value Vmin, as power is drawn by the LDO to provide the constant output voltage. In a particular example, Vmin may be 5V. The required capacitance, C, may then be calculated (for a 50Hz mains supply):

$$C = \frac{I * t}{\Delta V} = \frac{0.01 * 0.01}{5} = 20\mu F$$

Similarly, the current from the mains during the charging phase is determined by the dV/dt of the mains voltage and the value of the buffer capacitor. Since:

$$Vmains = 325V * \sin (2 * \pi * f * t),$$

then:

$$Imains = C * \frac{dV}{dt} = 22\mu F * 325V * 2 * \pi * f * \cos (2 * \pi * f * t).$$

That is:

$$Imains = 22\mu F * 325V * 2 * \pi * f = 2.25\,A.$$

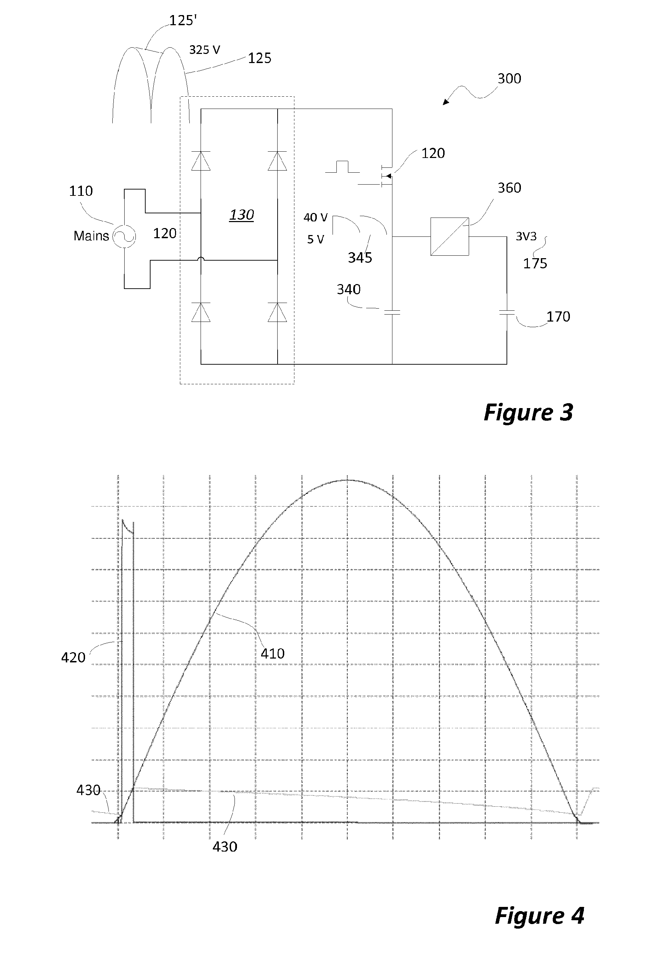

Figure 3 shows, schematically, a power converter according to embodiments in which a gated rectifier charges a capacitor which provides an input to a switched mode DC-DC power converter; figure 4 shows voltage and current waveforms for a converter as shown in figure 3.

The power converter 300 comprises, similar to the known converter in figure 1, an input 110 which is connectable to an AC mains supply 120. The AC mains supply 120 is rectified by bridge rectifier 130. The rectified voltage is connected intermittently, or in a gated fashion, across capacitor 340, the connection and disconnection being controlled by means of switch 150 in series with capacitor 340. However, as will be described in more detail hereinbelow, capacitor 340 may be different to capacitor 140. Moreover, in contrast to known converters, the capacitor in this is used as an input to a DC-DC power converter, which in this embodiment is implemented as switched mode DC-DC power converter 360. An output smoothing capacitor 370 may be connected across the output of the DC-DC power converter, from which the output is also taken. The figure also shows the waveforms corresponding to those in Figure 1. It will be noted that in this figure 3, the intermediate waveform 345 of the voltage across capacitor 340 is quadratic rather than saw-tooth. For constant output power, energy is drawn from the capacitor at a constant rate, and since the energy E in a capacitor is given by E = 1/2*C*V$^2$, the resulting ripple is broadly quadratic - the relatively brief charging period being not visible at this resolution. The fall in voltage resulting in a quadratic shape is illustrative of the case that the converter is non lossy and does not dissipate energy as is the case in the known converter shown in figure 1. In contrast, in the converter shown in figure 1, the LDO draws an approximately constant charge from the capacitor - that is to say, the current is approximately constant. Since the charge Q on the capacitor is given by Q = C*V, the waveform is generally saw-tooth. (Again, the relatively short charging period is not visible at this resolution.)

DC-DC power converters are distinguished from LDOs or other conventional voltage regulators, in that they are - at least ideally - non-dissipating. That is to say, in ideal operating conditions, a DC-DC power converter converts power provided by a first current (Iin) at a first known voltage (Vin) to a current (Iout) at second known voltage Vout, according to

$$Vin.Iin = Vout.Iout$$

while conserving energy. The basic concept as that energy is transferred, generally by means of a reactive element, from the first voltage to the second, such that power is converted from the first voltage to the second voltage. By far the most common form of DC-DC converter currently in use are switch mode power converters, in which relatively high frequency switching is use to enable the reactive element to operate. In contrast, LDOs and other dissipative voltage regulators control the output voltage, at least in part by intentionally dissipating power, typically by means of a resistive element. The resistive element may be, as in the case of an LDO, a transistor operating in linear mode. Thus DC-DC power converters may be considered as operating on imaginary (*i.e.* non-real, or reactive) power, whilst dissipative voltage regulators may be considered as operating on real (or resistive) power. The skilled person will appreciate that, although the term "LDO" is used herein generally in its narrow sense to refer specifically to low drop-out voltage regulators, the same arguments apply, even if the term is interpreted more broadly to include other linear dissipating series voltage regulators such as are widely known based on npn or NMOS transistors. Furthermore, the skilled person will equally appreciate that, as used in the above discussion, the term "voltage regulator" has its conventional narrow meaning and is limited to dissipative voltage regulators and thus does not extend to non-dissipating power converters, irrespective of whether such power converter are configured to regulate their output voltage.

In particular, switched mode DC-DC power converters can generally operate with high efficiency over a wider range of input conditions than can LDOs. In particular, in the example case in which a 220V AC mains is used to power a 3.3V output voltage, the DC-DC converter may be configured to operate with an input voltage which ranges from 5V-40V. In other words, a large ripple $\Delta V$ (in this case $\Delta V = 40-5V = 35V$) is allowed on the capacitor 370, which allows a reduction in its size. Also, the switch and diode of the DC-DC converter only need to handle 40 V, making them less expensive, than for a DC-DC converter directly converting the full mains voltage. Finally, since the maximum conversion ratio is 40V:3.3V, the duty-cycle increases to approximately 10%, which makes control a lot easier.

To determine the size of capacitor required for a typical example, consider an energy balance equation: the energy W stored in the buffer capacitor equals ½ $CV^2$ and this equals the energy delivered to the load - with an assumption that the converter is lossless.

$$W = \frac{C*(Vmax^2 - Vmin^2)}{2} = 33mW * 10ms.$$

So:

$$C = \frac{330*10^{-6}*2}{33^2 - 5^2} = 620nF.$$

It will immediately be appreciated that the size of capacitor required (620nF) in this example, is significantly smaller than the size of capacitor required for the equivalent example in the case of the known power converter comprising a gated rectifier and LDO. Further such a capacitor may typically be provided using 50V ceramic technology, rather than 16V electrolytic technology which may be have been required for the prior art solution.

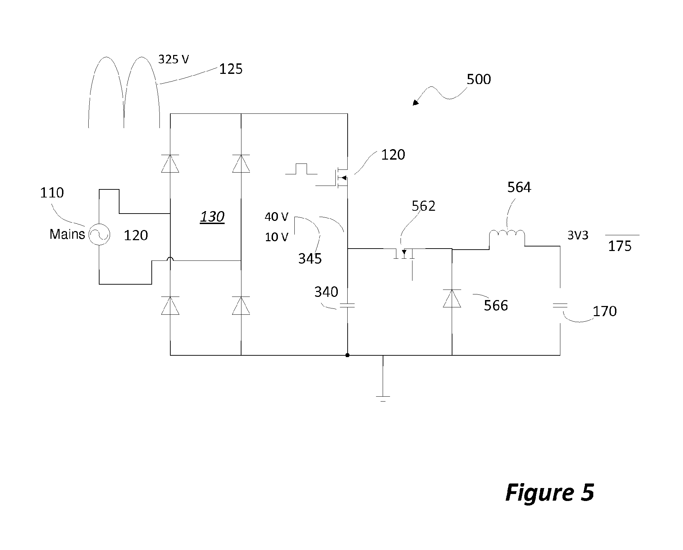

Further, the maximum input of the DC-DC converter in this example is 33 V, and so it may be possible to use a 40 V switch and a 40 V diode (see diode 566 in the embodiment shown in Figure 5). These are typically smaller and less expensive than the 400V or 600V devices which would be required for a DC-DC converter having the entire mains voltage as input. Yet further, it may also be possible to arrange them to switch at higher frequencies, compared with known DC-DC converters having the entire mains voltage as input. This may further lead to a potential reduction in the size of the inductive component in the DC-DC converter.

It will be appreciated that the gating switch has to stand-off the maximum mains voltage, and thus it typically will need to be a 600V device. However, the switching speed requirements on this switch are generally not very exacting; in other words it may be allowed switch relatively slowly, with a conduction time of typically 100 μs to 340 μs. So a relatively low specification, and thus inexpensive, device may be suitable.

Figure 4 shows the results of a simulation of the operation of a power converter as shown in figure 3. The mains voltage 410 is plotted against time, over a mains half-cycle. Also shown, at 420, is the mains current, which charges the capacitor 340. Finally, the figure also shows the voltage 430 across the capacitor 340. Topologically, the curves are similar to those shown in figure 1. However, due to the higher ripple allowed on the capacitor 340 relative to that on capacitor 140, the charging period, during which current is drawn from the mains, is significantly longer. As a result, the current level during that charging period is significantly lower.

The mains current may be calculated from the dV/dt of the mains voltage and the value of the buffer capacitor.

$$Vmains = 325V * \sin(2 * \pi * f * t),$$

and

$$Imains = C * \frac{dV}{dt} = 0.62\mu F * 325V * 2 * \pi * f * \cos(2 * \pi * f * t),$$

So

$$Imains = 0.62\mu F * 325V * 2 * \pi * f = 63.3 \text{ mA}.$$

The relatively low spike in current (in this case, for example, 63mA, rather than 2A), reduces the impact on power factor. However, it will be appreciated that, since most electronic equipment equipment draws current during the peak of the mains voltage, this current close to the zero-crossings may generally help to improve the power factor.

Figure 5 shows, in more detail, an example of a converter 500 according to figure 3. In particular, in this embodiment, the DC-DC converter 360 is implemented as a switch 562, which periodically switches current from the intermediate capacitor 340 to an inductor 564. A diode 566 is connected between ground and the switched node. These components form a conventional buck converter.

Methods of operation of DC-DC converters suitable for use in embodiments will be well-known to the skilled person, and so will not be repeated here. It is noted, however, that a particularly convenient, though non-limiting, control methodology is hysteretic control. As the skilled person will appreciate, in hysteretic control, a comparator is used to measure the voltage on the output capacitor, and whenever the output voltage drops below the desired value - for example 3.3V, a conversion pulse is generated.

From reading the present disclosure, other variations and modifications will be apparent to the skilled person. Such variations and modifications may involve equivalent and other features which are already known in the art of power converters, and which may be used instead of, or in addition to, features already described herein.

Although the appended claims are directed to particular combinations of features, it should be understood that the scope of the disclosure of the present invention also includes any novel feature or any novel combination of features disclosed herein either explicitly or implicitly or any generalisation thereof, whether or not it relates to the same invention as presently claimed in any claim and whether or not it mitigates any or all of the same technical problems as does the present invention.

Features which are described in the context of separate embodiments may also be provided in combination in a single embodiment. Conversely, various features which are, for brevity, described in the context of a single embodiment, may also be provided separately or in any suitable sub-combination. The applicant hereby gives notice that new claims may be formulated to such features and/or combinations of such features during the prosecution of the present application or of any further application derived therefrom.

For the sake of completeness it is also stated that the term "comprising" does not exclude other elements or steps, the term "a" or "an" does not exclude a plurality, a single processor or other unit may fulfil the functions of several means recited in the claims and reference signs in the claims shall not be construed as limiting the scope of the claims.

## Claims

1. A power converter configured to convert AC mains power to a DC voltage which is lower than an rms voltage of the AC mains, the power converter comprising:

   a rectifier for rectifying an AC mains power;
   a capacitor;
   a switch configured to supply the rectified AC mains power to the capacitor during only a low-voltage part of any cycle of the AC mains,

and a DC-DC power converter configured to convert power from the capacitor to the DC voltage.

2. A power converter as claimed in claim 1, wherein the switch is configured to charge the capacitor to a voltage which is no more than 10 times larger than the DC voltage.

3. A power converter as claimed in claim 1 or 2, wherein the DC voltage is in the range of 0.8V to 12V.

4. A power converter as claimed in claim 3, wherein the DC voltage is 3.3V.

5. A power converter as claimed in any preceding claim, wherein the DC-DC power converter is a switched mode power converter.

6. A power converter as claimed in claim 5 wherein the DC-DC power converter is a buck converter configured for operation using hysteretic control.

7. A power converter as claimed in any preceding claim, wherein the rectifier is a bridge rectifier.

8. An electronic equipment comprising a power converter as claimed in any preceding claim, wherein the electronic equipment is arranged to be operated for no more than 5% of the time in which it is connected to a mains supply, and is a one of the group of electronic equipments comprising home and office lighting, door openers including garage door openers, catch-releasers including door-catch releasers, alarm systems, domestic consumer media equipment including tv and hifi, and computing equipment.

9. A method of converting an AC mains power to a DC voltage which is lower than an rms voltage of the AC mains, the method comprising:

    rectifying the AC mains;
    supplying the rectified AC mains signal to charge a capacitor during only a low-voltage part of a mains half-cycle, the capacitor being configured as an input to a non-dissipating DC-DC power converter, and
    operating the switched mode DC-DC power converter to convert the power to the output voltage.

10. The method of claim 9, wherein the DC-DC power converter is a switched mode power converter.

**Amended claims in accordance with Rule 137(2) EPC.**

1. A power converter (300) configured to convert AC mains power to a DC voltage which is lower than an rms voltage of the AC mains, the power converter comprising:

    a rectifier (130) for rectifying an AC mains power;
    a capacitor (340);
    a switch (150) configured to supply the rectified AC mains power to the capacitor during only a low-voltage part of any cycle of the AC mains,
    and a DC-DC power converter (360) configured to convert power from the capacitor to the DC voltage,
    wherein the DC-DC power converter is a switched mode power converter;
    wherein the switch is configured to charge the capacitor to a voltage which is no more than 10 times larger than the DC voltage, and
    wherein the DC voltage is in the range of 0.8V to 12V..

2. A power converter as claimed in claim 1, wherein the DC voltage is 3.3V.

3. A power converter as claimed in claim 1 or 2 wherein the DC-DC power converter is a buck converter configured for operation using hysteretic control.

4. A power converter as claimed in any preceding claim, wherein the rectifier is a bridge rectifier.

5. An electronic equipment comprising a power converter as claimed in any preceding claim, wherein the electronic equipment is arranged to be operated for no more than 5% of the time in which it is connected to a mains supply, and is a one of the group of electronic equipments comprising home and office lighting, door openers including garage door openers, catch-releasers including door-catch releasers, alarm systems, domestic consumer media equipment including tv and hifi, and computing equipment.

*Figure 1*

*Figure 2*

*Figure 3*

*Figure 4*

*Figure 5*

Europäisches
Patentamt

European
Patent Office

Office européen
des brevets

## EUROPEAN SEARCH REPORT

Application Number

EP 13 15 8096

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2005 007377 A1 (SIEMENS AG [DE]) 24 August 2006 (2006-08-24) * paragraphs [0001], [0006], [0007], [0011], [0026] - [0033], [0051]; figures 2,4 * | 1-10 | INV. H02M7/217 |
| X | US 2010/014332 A1 (SHUEY KENNETH C [US]) 21 January 2010 (2010-01-21) * paragraphs [0023] - [0026]; figure 2 * | 1-4,7 | |
| X | WO 2012/158496 A2 (MARVELL WORLD TRADE LTD [BB]; KRISHNAMOORTHY RAVISHANKER [SG]; PITIGOI) 22 November 2012 (2012-11-22) * paragraphs [0033] - [0048]; figures 4A,4B * | 1-4,7 | |
| X | WO 2009/132693 A1 (INVENTIO AG [CH]; INGERSOLL RAND SECURITY TECHNO [US]; SCHWARZENTRUBER) 5 November 2009 (2009-11-05) * page 18, line 31 - page 20, line 33 * * page 23, line 15 - page 24, line 27; figure 1 * | 1,8 | TECHNICAL FIELDS SEARCHED (IPC) H02M |
| X | FR 2 785 735 A1 (ST MICROELECTRONICS SA [FR]) 12 May 2000 (2000-05-12) * abstract; figures 1-3 * | 1-7,9,10 | |
| X | US 2006/083038 A1 (LYNCH SCOTT [US]) 20 April 2006 (2006-04-20) * abstract; figures 8-10 * | 1-7,9,10 | |
| A | US 5 006 782 A (PELLY BRIAN R [US]) 9 April 1991 (1991-04-09) * column 5, line 48 - column 5, line 66; figure 3 * | 5,6,9,10 | |

-/--

The present search report has been drawn up for all claims

| Place of search | Date of completion of the search | Examiner |
|---|---|---|
| The Hague | 12 August 2013 | Speiser, Pierre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 13 15 8096

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2012/072075 A2 (HYDRIA ELEKTRONIK APS [DK]; KRAGH HANS OLE HJULMAND [DK]) 7 June 2012 (2012-06-07) * figure 1 * ----- | 1,5 | |

TECHNICAL FIELDS
SEARCHED        (IPC)

The present search report has been drawn up for all claims

| Place of search | Date of completion of the search | Examiner |
|---|---|---|
| The Hague | 12 August 2013 | Speiser, Pierre |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

     ...........................................................................
& : member of the same patent family, corresponding
    document

EPO FORM 1503 03.82 (P04C01)

**ANNEX TO THE EUROPEAN SEARCH REPORT
ON EUROPEAN PATENT APPLICATION NO.**                    EP 13 15 8096

This annex lists the patent family members relating to the patent documents cited in the above-mentioned European search report.
The members are as contained in the European Patent Office EDP file on
The European Patent Office is in no way liable for these particulars which are merely given for the purpose of information.

12-08-2013

| Patent document cited in search report | Publication date | Patent family member(s) | Publication date |
|---|---|---|---|
| DE 102005007377 A1 | 24-08-2006 | DE 102005007377 A1<br>WO 2006087275 A2 | 24-08-2006<br>24-08-2006 |
| US 2010014332 A1 | 21-01-2010 | NONE | |
| WO 2012158496 A2 | 22-11-2012 | TW 201308847 A<br>WO 2012158496 A2 | 16-02-2013<br>22-11-2012 |
| WO 2009132693 A1 | 05-11-2009 | NONE | |
| FR 2785735 A1 | 12-05-2000 | NONE | |
| US 2006083038 A1 | 20-04-2006 | NONE | |
| US 5006782 A | 09-04-1991 | NONE | |
| WO 2012072075 A2 | 07-06-2012 | DK 177225 B1<br>WO 2012072075 A2 | 23-07-2012<br>07-06-2012 |

EPO FORM P0459